# EUROPÄISCHE PATENTSCHRIFT

(11) **EP 1 064 590 B1**
(45) Veröffentlichungstag und Bekanntmachung des Hinweises auf die Patenterteilung: **29.09.2004**
(21) Anmeldenummer: 99916788.5
(22) Anmeldetag: 12.03.1999
(51) Int. Cl.: G05B 19/05, G05B 19/418

(54) **VERKÜRZTES DATENTELEGRAMM EINES AUTOMATISIERUNGSSYSTEMS**
SHORTENED DATA MESSAGE OF AN AUTOMATION SYSTEM
TELEGRAMME DE DONNEES ABREGE D'UN SYSTEME D'AUTOMATISATION

(30) Priorität: 25.03.1998 DE 19813003
(43) Veröffentlichungstag der Anmeldung: 03.01.2001
(73) Patentinhaber: SIEMENS AKTIENGESELLSCHAFT, 80333 München (DE)
(72) Erfinder: BARTHEL, Herbert, D-91074 Herzogenaurach (DE); SCHENK, Andreas, D-91052 Erlangen (DE); SCHÜTZ, Hartmut, D-91336 Heroldsbach (DE)
(86) Internationale Anmeldenummer: PCT/DE1999/000696
(87) Internationale Veröffentlichungsnummer: WO 1999/049373

(56) Entgegenhaltungen:
- EP-B- 0 150 275
- EP-B- 0 216 372
- EP-B- 0 576 459
- DE-A- 4 038 596
- US-A- 5 469 150

## Beschreibung

Die vorliegende Erfindung betrifft ein Automatisierungssystem bzw. ein Verfahren zum Betrieb eines Automatisierungssystems, bei dem zwischen den einzelnen Komponenten des Automatisierungssystems, z.B. einem zentralen Automatisierungsgerät, einerseits und einem Sensor und/oder Aktor zur Steuerung und/oder Überwachung eines technischen Prozesses andererseits, die über einen Bus kommunikativ miteinander verbunden sind, jeweils mittels eines Telegramms eine Datenübertragung ermöglicht ist.

Zur eindeutigen Identifizierung des Empfängers des Telegramms weist ein solches Telegramm üblicherweise zumindest eine Zielkennung und zur eindeutigen Identifizierung des Senders ferner eine Ursprungskennung auf. Wenn zwischen Sender und Empfänger zyklisch zu vorbestimmten oder vorbestimmbaren Zeitpunkten immer wieder Telegramme ausgetauscht werden, bleiben zumindest die Ziel- und die Ursprungskennung konstant. Es handelt sich also um einen redundanten Abschnitt des Telegramms, der die während eines Zeitabschnitts über den Bus übertragbare Datenmenge beschränkt.

Die US 5,469,150 beschreibt einen Sensor-Aktor-Bus und insbesondere ein Informations- und Kommunikationssystem mit einer Vielzahl von Komponenten, z.B. Sensoren oder Aktoren, welches die schnelle Kommunikation von einem Sensor-Status zwischen Komponenten erlaubt, welche über den Bus kommunizieren. Es wird eine Anpassung des Standard-CAN-Protokolls vorgeschlagen, welche die erforderliche Anzahl von Datenbits reduziert, um den Zustand einer Komponente zu übertragen, welche typischerweise nur zwei Zustände einnimmt.

Die DE 40 38 596 A1 beschreibt ein Verfahren zur Fehlererkennung bei Übertragung von Datenwörtern über einen Kanal mit parallelen Leitungen, auf denen die Stellen jeweils eines Worts gleichzeitig übertragen werden. Ein Längsparitätsprüfwort wird mit der Zahl der übertragenen Datenworte zu einem Prüfwort vereinigt. Das Prüfwort wird zum Empfänger übertragen und in diesem mittels einem aus der Zahl der Datenworte und einem Längsparitätsprüfwort gebildeten Prüfwort verglichen.

Aus der EP 0 216 372 B2 ist ein Datenbussystem in Kraftfahrzeugen bekannt, bei welchem verschiedene Teilnehmer über einen gemeinsamen Datenbus miteinander kommunizieren, wobei der Zugriff der einzelnen Teilnehmer auf den Datenbus für das Senden und das Empfangen der zu liefernden bzw. benötigten Daten voneinander unabhängig ist. Der Empfang der benötigten Daten ist jederzeit möglich und allein durch das Identifizierungskennzeichen der auf den Datenbus gegebenen Daten gewährleistet.

Aufgabe der vorliegenden Erfindung ist es folglich, ein Automatisierungssystem bzw. ein Verfahren zum Betrieb eines Automatisierungssystems anzugeben, bei dem die Menge der während eines Zeitabschnitts über den Bus übertragbaren Daten erhöht wird.

Diese Aufgabe wird mit einem Verfahren sowie einem Automatisierungssystem mit den im Anspruch 1 bzw. Anspruch 6 angegebenen Merkmalen gelöst.

Wenn der statische teil sowohl auf Seiten des Senders als auch auf Seiten des Empfängers bekannt ist, ist es bei einem Kommunikationsvorgang nicht erforderlich, den statischen Teil zu übermitteln. Der statische Teil kann dabei dem Sender bzw. dem Empfänger auf verschiedene Arten vorgegeben werden. Einerseits ist es z.B. möglich, die Daten des statischen Teils durch hardwaremäßige Einstellung z.B. mittels sog. Codierschalter an den jeweiligen Kommunikationsteilnehmers vorzugeben. Andererseits besteht natürlich auch die Möglichkeit, die Daten softwaremäßig, d.h. mittels einer entsprechenden Programmierung, die mittels einer entweder an den Kommunikationsteilnehmer direkt oder an das Automatisierungssystem insgesamt angeschlossenen Programmiervorrichtung erfolgen kann, den jeweiligen Kommunikationsteilnehmern vorzugeben.

Darüber hinaus ist der statische Teil sowohl auf Seiten des Senders als auch auf Seiten des Empfängers zumindest dann bekannt, wenn bereits mindestens ein Kommunikationsvorgang mit Übermittlung sowohl des statischen Teils als auch des varianten Teils erfolgt ist. Insofern besteht auch mit einem Kommunikationsvorgang, der zumindest einmal sowohl den statischen als auch den varianten Teil umfaßt, die Möglichkeit, sicherzustellen, daß der statische Teil sowohl auf Seiten des Senders als auch auf Seiten des Empfängers bekannt ist.

Auch für diesen Fall braucht aufgrund der Tatsache, daß, nachdem der mindestens eine Kommunikationsvorgang mit Übermittlung sowohl des statischen Teils als auch des varianten Teils erfolgt ist, der statische Teil sowohl auf Seiten des Senders als auch auf Seiten des Empfängers bekannt ist, der statische Teil bei weiteren Kommunikationsvorgängen nicht mehr übermittelt werden.

Bei Kommunikationsvorgängen, bei denen auf die Übermittlung des statischen Teils verzichtet wird, verkürzt sich also die Telegrammlänge um die Länge des statischen Teils. Die damit einhergehende geringere Datenmenge während eines Kommunikationsvorgangs bewirkt eine Entlastung des Busses und ermöglicht es, über den Bus während eines Zeitabschnitts eine größere Datenmenge zu übertragen.

Wenn eine Prüfsignatur sowohl über den statischen als auch zumindest über die Nutzdaten im varianten Teil des Telegramms gebildet wird und die Prüfsignatur bei einer Datenübertragung im varianten Teil des Telegramms mit übertragen wird, lassen sich fehlerhafte Veränderungen sowohl im varianten als auch im nicht übermittelten statischen Teil erkennen und ggf. geeignet behandeln.

Wenn mindestens ein vorbestimmtes oder vorbestimmbares Datum des varianten Teils entweder vor, bei oder nach jedem Übertragungsvorgang oder zeitabhängig, also jeweils nach Verstreichen einer vorgebbaren Zeitspanne, oder in Abhängigkeit von einer erfolgten Datenübertragung, insbesondere in Abhängigkiet von einer fehlerfrei erfolgten Datenübertragung inkrementiert oder dekrementiert wird, sind die zyklisch abgesetzten Telegramme eindeutig unterscheidbar, so daß der Empfänger durch Vergleich des vorbestimmten oder vorbestimmbaren Datums verschiedener Telegramme eindeutig das jeweils aktuellste Telegramm erkennen kann und andererseits bei fortwährendem Eintreffen von Telegrammen mit jeweils inkrementierteten oder dekrementierten Datum auf die Intaktheit der Datenübertragung zurückgeschlossen werden kann.

Allerdings muß dieses vorbestimmte oder vorbestimmbare Datum, das im folgenden auch als sog. "Lebenszeichen" bezeichnet wird, nicht notwendigerweise eine lückenlose Folge der natürlichen Zahlen darstellen, weil Quell- und Ziel-Verarbeitung nicht notwendig synchron sein müssen. Auf Seiten des Empfängers sind daher "Lücken" in begrenztem Umfang tolerierbar, wobei die Größe der Lücken vorgebbar ist, so daß im Falle einer Lücke die größer als die für den jeweiligen Prozeß maximal tolerierbare Lücke ist, eine entsprechende Alarmreaktion auslösbar ist.

Bei einer vorteilhaften Ausgestaltung der vorliegenden Erfindung wird das Lebenszeichen bei der Bildung der Prüfsignatur nicht berücksichtigt. Vorteilhaft ergibt sich dabei eine schnelle und sichere Auswertung des Telegramms (z.B. für eine Alarmerkennung) indem nur das empfangene Telegramm mit dem vorherigen Telegramm inklusive Prüfsignatur verglichen wird.

Im Normalfall, bei dem also keine Alarmsituation vorliegt, ist das Telegramm immer wieder identisch mit dem vorherigen Telegramm. Erst ein Unterschied weist auf einen Alarm hin. Durch den jeweiligen Vergleich von Nutzdaten einerseits und Prüfsignatur andererseits wird der Sicherheitsanforderung genüge getan. Würde auch das Lebenszeichen bei der Bildung der Prüfsignatur berücksichtigt, würden sich die Prüfsignaturen aufeinander folgender Telegramme bei jeweils identischen Nutzdaten lediglich aufgrund des sich von Telegramm zu Telegramm ändernden Lebenszeichens unterscheiden.

Damit ergeben sich unterschiedliche Strategien für die Auswertung der Prüfsignatur: Einmal werden nur die Prüfsignaturen von zwei aufeinanderfolgenden Telegrammen verglichen, wobei bei unterschiedlichen Prüfsignaturen so ausgewertet werden, daß sich die Nutzdaten der beiden aufeinanderfolgenden Telegramme unterscheiden. Bei Vorliegen unterschiedlicher Prüfsignaturen würden die Nutzdaten verglichen und ermittelt, bei welchem Nutzdaten eine Änderung stattgefunden hat. Eine derartige Prüfung ist jedoch nur im Falle vergleichsweise geringer sicherheitstechnischer Anforderungen ausreichend.

Bei höheren sicherheitstechnischen Anforderungen wird bei aufeinanderfolgenden Telegrammen immer sowohl die Prüfsignatur mit der Prüfsignatur des vorhergehenden Telegramms als auch der komplette Nutzdatensatz mit den entsprechenden Nutzdatensatz des vorhergehenden Telegramms verglichen. Wenn sich der Nutzdatensatz ändert, ist dies sowohl an der geänderten Prüfsignatur als auch am geänderten Nutzdatensatz erkenntlich.

Bei einer Datenübertragung vom Sender zum Empfänger bildet der Sender vor dem Versenden des neuen Telegramms eine Prüfsignatur über die Nutzdaten. Diese Prüfsignatur wird an das Telegramm angehängt und mit übertragen. Auf der Empfängerseite vergleicht der Empfänger die Prüfsignatur des zuletzt eingegangenen Telegramms mit der Prüfsignatur des zuvor eingegangenen Telegramms. Die Prüfsignatur des zuletzt eingegangenen Telegramms ist identisch mit der Prüfsignatur des zuvor eingegangenen Telegramms, wenn die Übertragung fehlerfrei erfolgt ist und sich an den Nutzdaten seit der letzten Übertragung keine Änderungen ergeben haben. Aus diesem Grunde wird also vorteilhaft das Lebenszeichen, das sich ja von Übertragung zu Übertragung ändert, nicht in die Bildung der Prüfsignatur einbezogen.

Der Empfänger vergleicht also beim Empfang eines neuen Telegramms die Prüfsignatur des zuletzt eingegangenen Telegramms mit der Prüfsignatur des zuvor eingegangenen Telegramms und die Nutzdaten insgesamt mit den Nutzdaten des zuvor eingegangenen Telegramms. Bei Unterschieden, entweder in der Prüfsignatur neu berechnet und der Vergleich mit der Prüfsignatur des zuvor eingegangenen Telegramms wiederholt. Das Gleiche gilt, wenn eine Änderung in den Nutzdaten, aber keine Änderung inder Prüfsignatur vorliegt. Nur wenn sowohl Prüfsignatur als auch Nutzdaten sich im Vergleich zu der vorhergehenden Übertragung geändert haben, liegt am Prozeß ein neuer Status vor, z.B. eine Alarmsituation, auf die der Empfänger entsprechend reagieren muß.

Liegt dagegen entweder in der Prüfsignatur oder in den Nutzdaten eine Änderung vor, ist vom Empfänger die Prüfsignatur neu zu berechnen und der Vergleich mit der Prüfsignatur des vorhergehenden Telegramms zu wiederholen, wobei in Abhängigkeit vom sich dabei ergebenenden Ergebnis der Empfänger z.B. ein neues Telegramm anfordern kann.

Wenn zumindest eine der Eingabeeinheiten und/oder zumindest eine der Ausgabeeinheiten als sicherheitsgerichtete Eingabeeinheit bzw. sicherheitsgerichtete Ausgabeeinheit ausgebildet ist, wird mit dem oben beschriebenen Verfahren zum Betrieb eines Automatisierungssystems oder dem dazu analog ausgebildeten Automatisierungs system, das zur Ausführung des Betriebs eines Automatisierungssystems geeignet ist, eine sicherheitsgerichtete Komponente des Automatisierungssystems geschaffen, die zumindest die sicherheitsgerichtete Eingabeeinheit, die sicherheitsgerichtete Ausgabeeinheit und die zwischen diesen Komponenten stattfindende Datenübertragung umfaßt.

Weitere Merkmale, Vorteile und Anwendungsmöglichkeiten der vorliegenden Erfindung ergeben sich aus den Unteransprüchen der nachfolgenden Beschreibung eines Ausführungsbeispiels anhand der Zeichnung und der Zeichnung selbst.

Dabei zeigen:
- FIG 1: eine schematische Darstellung eines Automatisierungssystems,
- FIG 2: ein schematisches Layout eines Telegramms und
- FIG 3: ein schematisches Layout eines dem für das Übertragungsmedium definierten Übertragungsprotokoll genügenden Telegramms.

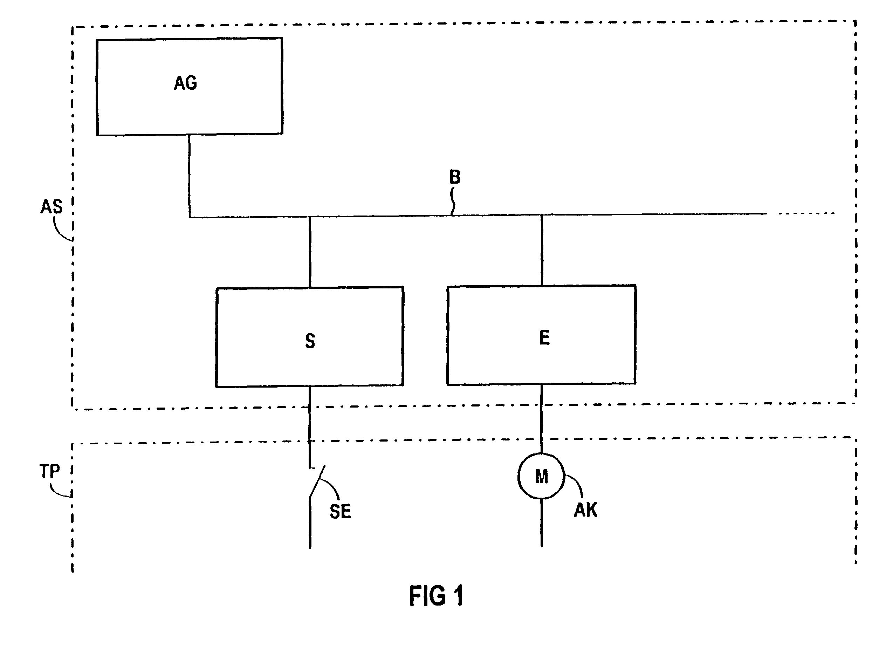

Gemäß FIG 1 weist das Automatisierungssystem AS, das zur Steuerung und/oder Überwachung eines technischen Prozesses TP vorgesehen ist, z.B. ein zentrales und/oder übergeordnetes Automatisierungsgerät AG und zumindest einen Sender S sowie einen Empfänger E auf, die über einen Bus B kommunikativ miteinander verbunden sind. Der Senders ist z.B. eine Eingabeeinheit S zum Anschluß externer Sensorik SE, wobei im Ausführungsbeispiel exemplarisch ein Schalter SE als externer Sensor SE dargestellt ist. Der Empfänger E ist z.B. eine Ausgabeeinheit zum Anschluß externer Aktorik AK, wobei im Ausführungsbeispiel als externer Aktor AK ein Motor AK dargestellt ist. Selbstverständlich können an den Sender S auch andere Sensoren, wie z.B. Grenzwertmelder, Füllstandswächter oder auch Sensoren, die analoge Werte liefern, wie z.B. Wegmeßeinrichtungen etc. angeschlossen sein. Entsprechend können auch an den Empfänger E weitere Aktoren, wie z.B. Magnetventile, Leuchten, Hydraulikaggregate, die entsprechend ihrer Ausgestaltung entweder analog oder digital ansteuerbar sind, angeschlossen sein.

An den Bus B des Automatisierungssytems AS können, wie im Ausführungsbeispiel gemäß FIG 1 angedeutet, weitere Sender S und/oder Empfänger E angeschlossen sein.

Die Datenübertragung von Sender S zum Empfänger E erfolgt über den Bus B mittels eines Telegramms T, das einerseits dem für den Bus B vorgeschriebenen Busprotokoll genügt und darüber hinaus die nachfolgenden Charakteristiken aufweist, die die im Zusammenhang mit der vorliegenden Erfindung bewirkten Vorteile tragen.

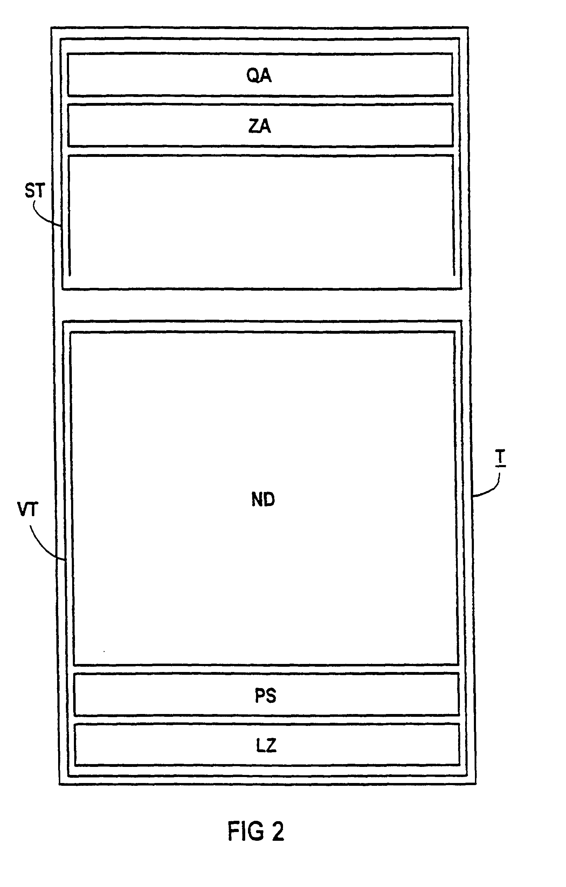

Gemäß FIG 2 weist das Telegramm T einen varianten Teil VT und einen statischen Teil ST auf. Dabei umfaßt der statische Teil ST zumindest eine Quelladresse QA und eine Zieladresse ZA, wobei mit der Quelladresse QA eine Referenzierung der sendenden Station S und mit der Zieladresse ZA eine Referenzierung des Empfängers E möglich ist.

Der variante Teil VT umfaßt zumindest die Nutzdaten ND und darüber hinaus eine Prüfsignatur PS, wobei die Prüfsignatur im einfachsten Fall z.B. als Parity-Information ausgebildet ist, vorteilhaft jedoch z.B. als Blocksicherung (Cyclic Redundancy Check, CRC), mit dem Blockfehler, also Fehler innerhalb des gesamten Telegramms T mit hoher Sicherheit erkennbar sind, ausgeführt. Dabei liegt die Besonderheit darin, daß diese Prüfsignatur PS sowohl über den statischen Teil ST als auch über den varianten Teil VT des Telegramms T gebildet wird.

Je nach Einsatzbereich und hinzugezogener Norm könnte die mit der Prüfsignatur PS bewirkte Sicherheitsmaßnahme dadurch modifiziert werden, daß bei Einsatz eines CRC als Prüfsignatur PS die CRC-Länge modifiziert wird. Bei bestimmten Anwendungen ist z.B. eine 32-Bit-CRC erforderlich, für andere Anwendungen könnten 8-Bit-CRC ausreichen.

Weiterhin weist das Telegramm T im Ausführungsbeispiel gemäß FIG 2 ein Datum LZ im varianten Teil VT auf, das vor, bei oder nach jedem Datenübertragungsvorgang entweder inkrementiert oder dekrementiert wird. Das Datum LZ wird vom Empfänger E des Telegramms T ausgewertet und gibt einen Hinweis darauf, ob die Kommunikationsbeziehung intakt ist. Wenn nämlich während eines vorbestimmten oder vorbestimmbaren Zeitraums der Wert des Datums LZ unverändert bleibt, steht für den Empfänger E fest, daß entweder der Sender S ausgefallen ist und keine neuen, aktuelleren Telegramme T liefert oder daß die Kommunikationsverbindung zwischen Sender S und Empfänger E unterbrochen ist, so daß neue, aktuellere Telegramme T den Empfänger E nicht mehr erreichen können.

Während das Telegramm T zur vorbestimmten oder vorbestimmbaren Zeitpunkten, insbesondere zyklisch abgesetzt wird, und damit z.B. alle 5 ms ausgesandt wird, muß die obengenannte vorbestimmte oder vorbestimmbare Zeit zumindest größer als die Zykluszeit, mit der die Telegramme T abgesetzt werden, gewählt werden. Wenn nach einer vorbestimmten oder vorbestimmbaren Zeit von z.B. 8ms beim Empfänger E immer noch kein neues, aktuelleres Telegramm T mit einem veränderten Inhalt des Datums LZ vorliegt, ist dies für den Empfänger E als Fehlersituation auswertbar, so daß dieser die erforderlichen sicherheitstechnischen Reaktionen einleiten kann.

Andererseits hat die Zeit, innerhalb der bei Ausbleiben eines intakten Telegrammes T die Sicherheitsreaktion ausgelöst werden muß, eine prozeßbedingte Obergrenze. Die Obergrenze orientiert sich an einer Fehlertoleranzzeit des betreffenden Prozesses.

Andererseits muß die Sicherheitszeit bei zyklischer Verarbeitung vom gesamten Bustransfer inklusive der CPU-Zykluszeit der Zykluszeit des übergeordneten Automatisierungsgerätes AG, realisierbar sein.

Mit jedem neuen gültigen Telegramm T, das korrekt vom Empfänger E empfangen wird, wird die Überwachungszeit neu gestartet, so daß je nach Wahl der Sicherheitszeitspanne ein oder mehr fehlerhafte Telegramm T tolerierbar sind.

Eine Fehlersituation liegt ferner auch dann vor, wenn die Laufzeit der jeweiligen Telegramme, d.h. die Zeit zwischen Versand durch den Sender und Empfang durch den Empfänger, eine vorgegebene oder vorgebbare Maximallaufzeit überschreitet.

Zum Erkennen einer derartigen Fehlersituation ist vorgesehen, ein Telegramm mit einem nachfolgend als Lebenszeichen LZ bezeichneten Datum LZ abzusetzen, wobei der Empfänger E, z.B. ein sicherheitsgerichteter Sensor oder ein sicherheitsgerichteter Aktor, das mit dem Telegramm T empfangene Lebenszeichen LZ in den Nutzdatenbereich ND eines Antworttelegramms T kopiert und dieses Antworttelegramm T an den ursprünglichen Sender S zurückleitet.

Der ursprüngliche Sender S übermittelt aus dem Zeitpunkt des Eintreffens des Antworttelegramms T und dem Zeitpunkt der ursprünglichen Sendung eine Zeitdifferenz, wobei die eindeutige Zuordenbarkeit aufgrund des Lebenszeichens LZ des ursprünglichen Telegramms und T einem identischen Datum in den Nutzdaten ND des Antworttelegramms T gewährleistet ist.

Unter Berücksichtigung der Tatsache, daß von der Summenlaufzeit, der Laufzeit des Telegramms T vom ursprünglichen Sender S zum Empfänger E und zurück zum ursprünglichen Sender S, maximal ca. 2/3 für die Übertragung vom Sender S zum Empfänger E verbraucht sein kann; ergibt sich die tolerierbare Maximallaufzeit als ca. 2/3 der ermittelten Zeitdifferenz.

Liegt nach Verstreichen einer derart ermittelten tolerierbaren Maximallaufzeit kein neues, an seinem inkrementierten oder dekrementierten Lebenszeichen erkennbares Telegramm T vor, so läßt sich dieser Umstand als Fehlersituation auswerten.

In der Darstellung gemäß FIG 2 ist nur das Telegramm T dargestellt. Nicht dargestellt sind dagegen die Busprotokolldaten, die gemäß dem für das Bussystem B vorgesehenen Busprotokoll vor bzw. nach dem Telegramm T übertragen werden.

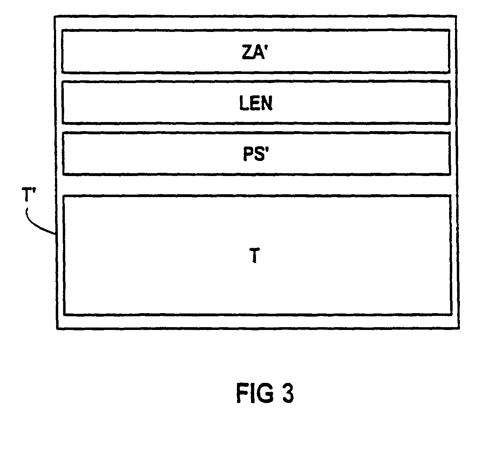

Diese Daten, so weit sie im Zusammenhang mit der vorliegenden Erfindung relevant sind, sind in FIG 3 schematisch dargestellt, wobei das Telegramm T gemäß FIG 2 in FIG 3 als Block T dargestellt ist.

Gemäß FIG 3 umfaßt das Telegramm T' neben dem Telegramm T, das quasi die Nutzdaten des Telegramms T' darstellt, eine Zieladresse ZA', eine Längenkennung LEN und eine Prüfsignatur PS'.

Das Datum ZA' definiert die Zieladresse und damit den Empfänger des Telegramms T'. Dies ist insbesondere dann wichtig, wenn die Übermittlung des statischen Teils ST des Telegramms T unterbleibt und somit im Telegramm T selbst keine Zielkennung mehr erhalten ist. Aufgrund der Zieladresse ZA' des Telegramms T ist es dennoch möglich, das Telegramm T' dem jeweiligen Empfänger zu übermitteln.

Im Ausführungsbeispiel wird das Übertragungsverfahren z.B. über beim Profibus eingesetzt, wobei die Zieladresse ZA' dann eine entsprechend der geografischen Entfernung des Empfängers kodierte Zieladresse ist.

Im Gegensatz dazu ist die Zieladresse ZA gemäß FIG 2 eine eindeutige, ggf. aber willkürliche Kennung, die zuvor mit sämtlichen sicherheitsrelevanten Kommunikationsteilnehmern vereinbart ist und diesen auch bekannt ist. Jedem sicherheitsrelevanten Kommunikationsteilnehmer ist also eine eineindeutige Kennung zugeordnet, die bei Kommunikationsvorgängen zwischen den sicherheitsrelevanten Kommunikationsteilnehmern als Quell- oder Zieladresse verwendet und zur Überwachung der Kommunikationsvorgänge bei einem Vergleich auch herangezogen wird.

Weiterhin wird eine Längenkennung LEN, die die Gesamtlänge des aktuell übertragenen Telegramms T' angibt, übertragen. Auch bei den für das Übertragungsmedium definierten Busprotokoll wird über das Gesamttelegramm T' eine Prüfsignatur PS' gebildet.

Es wird ein Verfahren zum Betrieb eines Automatisierungssystems bzw. ein Automatisierungssystem angegeben, bei dem alle sicherheitsgerichteten Informationen zyklisch mit einem Sicherheitsprotokoll ausgetauscht werden und dadurch Informationsverluste erkannt werden, wobei Daten, die auch bei mehrfacher Übertragung unverändert bleiben, nur einmal übertragen werden.

Weiterhin ist dadurch der Empfänger in Lage den Sender sicherheitstechnisch zu überwachen, da der Empfänger fortgesetzt das Eintreffen neuer Nachrichten erwartet und das Ausbleiben neuer Nachrichten, die jeweils anhand ihres Lebenszeichens als neue Nachrichten erkennbar wären, während einer vorgebbaren Toleranzzeit als Fehlersituation auswertet.

## Patentansprüche

1. Verfahren zum Betrieb eines Automatisierungssystems (AS) mit einem Automatisierungsgerät (AG), mindestens einem Sender (S) und mindestens einem Empfänger (E), die über einen Bus (B) derart kommunikativ miteinander verbunden sind, daß jeweils mittels eines Telegramms (T) eine Datenübertragung ermöglicht ist, wobei der Sender (S) insbesondere eine Eingabeeinheit (S) zum Anschluß externer Sensorik (SE) und der Empfänger (E) insbesondere eine Ausgabeeinheit (E) zum Anschluß externer Aktorik (AK) ist, wobei das Telegramm (T) zu vorbestimmten oder vorbestimmbaren Zeitpunkten zyklisch/ abgesetzt wird, wobei das Telegramm (T) einen varianten Teil (VT) und einen statischen Teil (ST) aufweist, wobei der statische Teil (ST) zumindest eine Quelladresse (QA) und eine Zieladresse (ZA) umfasst und wobei eine Übermittlung des statischen Teils (ST) zusammen mit dem varianten Teil (VT) unterbleibt, wenn der statische Teil (ST) sowohl auf Seiten des Senders (S) als auch auf Seiten des Empfängers (E) bekannt ist.

2. Verfahren nach Anspruch 1, **dadurch gekennzeichnet, daß** eine Übermittlung des statischen Teils (ST) zusammen mit dem varianten Teil (VT) unterbleibt, wenn bereits mindestens ein Kommunikationsvorgang mit Übermittlung sowohl des statischen Teils (ST) als auch des varianten Teils (VT) erfolgt ist, so daß der statische Teil (ST) sowohl auf Seiten des Senders (S) als auch auf Seiten des Empfängers (E) bekannt ist.

3. Verfahren nach Anspruch 1 oder 2, **dadurch gekennzeichnet, daß** eine Prüfsignatur (PS) sowohl über den statischen Teil (ST) als auch zumindest über die Nutzdaten (ND) des varianten Teils (VT) des Telegramms (T) gebildet wird und bei einer Datenübertragung im varianten Teil (VT) des Telegramms (T) mit übertragen wird.

4. Verfahren nach Anspruch 1, 2 oder 3, **dadurch gekennzeichnet, daß** mindestens ein vorbestimmtes oder vorbestimmbares Datum (LZ) des varianten Teils (VT) entweder vor, bei oder nach jedem Datenübertragungsvorgang oder zeitabhängig oder in Abhängigkeit von einer erfolgten, insbesondere fehlerfreien, Datenübertragung inkrementiert oder dekrementiert wird.

5. Verfahren nach Anspruch 1, 2, 3 oder 4, **dadurch gekennzeichnet, daß** zumindest eine der Eingabeeinheiten und/oder zumindest eine der Ausgabeeinheiten als sicherheitsgerichtete Eingabeeinheit bzw. sicherheitsgerichtete Ausgabeeinheit ausgebildet ist.

6. Automatisierungssystem mit einem Automatisierungsgerät (AG), mindestens einem Sender (S) und mindestens einem Empfänger (E), die über einen Bus (B) derart kommunikativ miteinander verbindbar sind, daß jeweils mittels eines Telegramms (T) eine Datenübertragung ermöglicht ist, wobei der Sender (S), insbesondere eine Eingabeeinheit (S) zum Anschluß externer Sensorik (SE) und der Empfänger (E), insbesondere eine Ausgabeeinheit zum Anschluß externer Aktorik (AK) ist, wobei das Telegramm zur vorbestimmten oder vorbestimmbaren Zeitpunkten zyklisch absetzbar ist, wobei das Telegramm einen varianten Teil (VT) und einen statischen Teil (ST) aufweist, wobei der statische Teil (ST) zumindest eine Quelladresse (QA) und eine Zieladresse (ZA) umfasst und wobei eine Übermittlung des statischen Teils (ST) zusammen mit dem varianten Teil unterbleibt, wenn der statische Teil (ST) sowohl auf Seiten des Senders (S) als auch auf Seiten des Empfängers (E) bekannt ist.

7. Automatisierungssystem nach Anspruch 6, **dadurch gekennzeichnet, daß** eine Übermittlung des statischen Teils (ST) zusammen mit dem varianten Teil unterbleibt, denn bereits mindestens ein Kommunikationsvorgang mit Übermittlung sowohl des statischen Teils (ST) als auch des varianten Teil (VT) erfolgt ist, so daß der statische Teil (ST) sowohl auf Seiten des Senders (S) als auch auf Seiten des Empfängers (E) bekannt ist.

8. Automatisierungssystem nach Anspruch 6 oder 7, **dadurch gekennzeichnet, daß** eine Prüfsignatur (PS) sowohl über den statischen Teil (ST) als auch zumindest über die Nutzdaten (ND) des varianten Teils (VT) des Telegramms (T) bildbar ist und bei einer Datenübertragung im varianten Teil (VT) des Telegramms (T) mit übertragbar ist.

9. Automatisierungssystem nach Anspruch 6, 7 oder 8, **dadurch gekennzeichnet, daß** mindestens ein vorbestimmtes oder vorbestimmbares Datum(LZ)des varianten Teils (VT) entweder vor, bei oder nach jedem Datenübertragungsvorgang oder zeitabhängig oder in Abhängigkeit von einer erfolgten, insbesondere fehlerfreien, Datenübertragung inkrementierbar oder dekrementierbar ist.

10. Automatisierungssystem nach Anspruch 6, 7, 8 oder 9, **dadurch gekennzeichnet, daß** mindestens eine der Eingabeeinheiten und/oder zumindest eine der Ausgabeeinheiten als sicherheitsgerichtete Eingabeeinheit bzw, sicherheitsgerichtete Ausgabeeinheit ausgebildet ist.

## Claims

1. Method for operating an automation system (AS) comprising an automation unit (AG), at least one transmitter (S) and at least one receiver (E) which are linked for communication with each other via a bus (B) in such a way that transmission of data is made possible via a telegram (T), whereby the transmitter (S) is in particular an input unit (S) for connecting external sensor systems (SE), and the receiver (E) is in particular an output unit (E) for connecting external actuator systems (AS), whereby the telegram is issued at prespecified or prespecifiable points in time, whereby the telegram (T) features a variable part (VT) and a constant part (ST), whereby the constant part (ST) features at least one source address (QA) and one destination address (ZA) and whereby the transfer of the constant part (ST) together with the variable part (VT) is suppressed if the constant part (ST) is known both on the transmitter (S) side and on the receiver (E) side.

2. Method according to Claim 1, wherein the transfer of the constant part (ST) together with the variable part (VT) is suppressed if a at least one previous communications operation transmitting both the constant part (ST) and the variable part (VT) has taken place so that the constant part (ST) is known both on the transmitter (S) side and on the receiver (E) side.

3. Method according to Claim 1 or 2, wherein a check signature (PS) is formed both covering the constant part (ST) and also at least the payload data (ND) of the variable part (VT) of the telegram (T) and which is transmitted as well in the variable part (VT) of the telegram (T) when data is transmitted.

4. Method according to Claim 1, 2 or 3 wherein at least one predefined or predefineable data item (LZ) of the variable part (VT), is incremented or decremented before, during or after each data transmission operation or as a function of time or as a function of a data transmission that has taken place free of errors.

5. Method according to Claim 1, wherein at least one of the input units and/or at least one of the output units is embodied as a security input unit or security output unit respectively.

6. Method for operating an automation system (AS) comprising an automation unit (AG), at least one transmitter (S) and at least one receiver (E) which are linked for communication with each other via a bus (B) in such a way that transmission of data is made possible via a telegram (T), whereby the transmitter (S), is in particular and input unit (S) for connecting external sensor systems (SE), and the receiver (E) is in particular an output unit (E) for connecting external actuator systems (AS), whereby the telegram is issued at prespecified or prespecifiable points in time, whereby the telegram (T) is output cyclically at predefined or predefineable times, whereby the telegram (T) features a variable part (VT) and a constant part (ST), whereby the constant part (ST) features at least one source address (QA) and one destination address (ZA) and whereby the transfer of the constant part (ST) together with the variable part (VT) is suppressed if the constant part (ST) is known both on the transmitter (S) side and on the receiver (E) side.

7. Automation system according to Claim 6, wherein the transfer of the constant part (ST) together with the variable part (VT) is suppressed if a at least one previous communications operation transmitting both the constant part (ST) and the variable part (VT) has taken place so that the constant part (ST) is known both on the transmitter (S) side and on the receiver (E) side.

8. Automation system according to Claim 6 or 7, wherein a check signature (PS) is formed both covering the constant part (ST) and also at least the payload data (ND) of the variable part (VT) of the telegram (T) and which is transmitted as well in the variable part (VT) of the telegram (T) when data is transmitted.

9. Automation system according to Claim 6, 7 or 8, at least one predefined or predefineable data item (LZ) of the variable part (VT), is incremented or decremented before, during or after each data transmission operation or as a function of time or as a function of a data transmission that has taken place free of errors.

10. Automation system according to Claim 6, 7, 8 or 9, wherein at least one of the input units and/or at least one of the output units is embodied as a security input unit or security output unit respectively.

## Revendications

1. Procédé de commande d'un système automatisé (AS) comportant un appareil automatisé (AG), au moins un émetteur (S) et au moins un récepteur (E) qui sont reliés par l'intermédiaire d'un bus (B) de manière à communiquer de telle sorte qu'une transmission de données est possible à chaque fois au moyen d'un télégramme (T), l'émetteur (S) étant notamment une unité d'entrée (S) pour le raccordement d'un système capteur externe (SE) et le récepteur (E) étant notamment une unité de sortie (E) pour le raccordement d'un système actionneur externe (AK), le télégramme (T) étant transmis de façon cyclique à des instants prédéterminés ou pouvant être prédéterminés, le télégramme (T) comportant une partie variable (VT) et une partie statique (ST), la partie statique (ST) comprenant au moins une adresse d'origine (QA) et une adresse de destination (ZA) et la transmission de la partie statique (ST) conjointement avec la partie variable (VT) ne s'effectuant pas lorsque la partie statique (ST) est connue aussi bien du côté de l'émetteur (S) que du côté du récepteur (E).

2. Procédé selon la revendication 1, **caractérisé par le fait que** la transmission de la partie statique (ST) conjointement avec la partie variable (VT) ne s'effectue pas lorsque au moins une opération de communication avec transmission aussi bien de la partie statique (ST) que de la partie variable (VT) a déjà été effectuée de telle sorte que la partie statique (ST) est connue aussi bien du côté de l'émetteur (S) que du côté du récepteur (E).

3. Procédé selon la revendication 1 ou 2, **caractérisé par le fait qu'**on forme une signature de contrôle (PS) aussi bien sur la partie statique (ST) que sur au moins les données utiles (ND) de la partie variable (VT) du télégramme (T) et, lors d'une transmission de données, on la transmet dans la partie variable (VT) du télégramme (T).

4. Procédé selon la revendication 1, 2 ou 3, **caractérisé par le fait qu'**on incrémente ou décrémente au moins une donnée (LZ), prédéterminée ou pouvant être prédéterminée, de la partie variable (VT) soit avant, pendant ou après chaque opération de transmission de données, soit en fonction du temps, soit en fonction d'une transmission de données effectuée, notamment sans erreur.

5. Procédé selon la revendication 1, 2, 3 ou 4, **caractérisé par le fait qu'**au moins l'une des unités d'entrée et/ou au moins l'une des unités de sortie sont conçues comme une unité d'entrée orientée sécurité. respectivement comme une unité de sortie orientée sécurité.

6. Système automatisé comportant un appareil automatisé (AG), au moins un émetteur (S) et au moins un récepteur (E) qui sont reliés par l'intermédiaire d'un bus (B) de manière à communiquer de telle sorte qu'une transmission de données est possible à chaque fois au moyen d'un télégramme (T), l'émetteur (S) étant notamment une unité d'entrée (S) pour le raccordement d'un système capteur externe (SE) et le récepteur (E) étant notamment une unité de sortie pour le raccordement d'un système actionneur externe (AK), le télégramme pouvant être transmis de façon cyclique à des instants prédéterminés ou pouvant être prédéterminés, le télégramme comportant une partie variable (VT) et une partie statique (ST), la partie statique (ST) comprenant au moins une adresse d'origine (QA) et une adresse de destination (ZA) et la transmission de la partie statique (ST) conjointement avec la partie variable ne s'effectuant pas lorsque la partie statique (ST) est connue aussi bien du côté de l'émetteur (S) que du côté du récepteur (E).

7. Système automatisé selon la revendication 6, **caractérisé par le fait que** la transmission de la partie statique (ST) conjointement avec la partie variable ne s'effectue pas lorsque au moins une opération de communication avec transmission aussi bien de la partie statique (ST) que de la partie variable (VT) a déjà été effectuée de telle sorte que la partie statique (ST) est connue aussi bien du côté de l'émetteur (S) que du côté du récepteur (E).

8. Système automatisé selon la revendication 6 ou 7, **caractérisé par le fait qu'**une signature de contrôle (PS) peut être formée aussi bien sur la partie statique (ST) que sur au moins les données utiles (ND) de la partie variable (VT) du télégramme (T) et que, lors d'une transmission de données, elle peut être transmise dans la partie variable (VT) du télégramme (T).

9. Système automatisé selon la revendication 6, 7 ou 8, **caractérisé par le fait qu'**au moins une donnée (LZ), prédéterminée ou pouvant être prédéterminée, de la partie variable (VT) peut être incrémentée ou décrémentée soit avant, pendant ou après chaque opération de transmission de données, soit en fonction du temps, soit en fonction d'une transmission de données effectuée, notamment sans erreur.

10. Système automatisé selon la revendication 6, 7, 8 ou 9, **caractérisé par le fait qu'**au moins l'une des unités d'entrée et/ou au moins l'une des unités de sortie sont conçues comme une unité d'entrée orientée sécurité respectivement comme une unité de sortie orientée sécurité.
